# Europäisches Patentamt
# European Patent Office
# Office européen des brevets

(19)

(11) Numéro de publication: **0 194 928
B1**

(12) # FASCICULE DE BREVET EUROPEEN

(45) Date de publication du fascicule du brevet:
**24.05.89**

(21) Numéro de dépôt: **86400459.3**

(22) Date de dépôt: **05.03.86**

(51) Int. Cl.⁴: **B62D 6/02**

(54) Dispositif asservi de contrôle de débit pour installation hydraulique, notamment pour direction assistée de véhicule.

(30) Priorité: **13.03.85 FR 8503687**

(43) Date de publication de la demande:
**17.09.86 Bulletin 86/38**

(45) Mention de la délivrance du brevet:
**24.05.89 Bulletin 89/21**

(84) Etats contractants désignés:
**DE GB IT**

(56) Documents cités:
**EP-A- 0 072 732
EP-A- 0 089 512
DE-A- 2 412 337
FR-A- 2 207 481
FR-A- 2 275 715**

(73) Titulaire: **BENDIX France, 126, rue de Stalingrad,
F-93700 Drancy(FR)**

(72) Inventeur: **Kervagoret, Gilbert, 5 Impasse Nobleterre,
F-95100 Argenteuil(FR)**

(74) Mandataire: **Lejet, Christian et al, Division Technique
Service Brevets BENDIX Europe 126, rue de Stalingrad,
F-93700 Drancy(FR)**

ACTORUM AG

## Description

La présente invention concerne les dispositifs asservis de contrôle de fluide pour installation hydraulique, notamment pour direction assistée de véhicule, comprenant une source de pression dont la sortie est reliée à un système de commande de moteur hydraulique, le dispositif étant destiné à être interposé dans une conduite de dérivation entre la sortie de la source de pression et une bâche, et comprenant un corps comportant un alésage dans lequel est monté coulissant un tiroir modulateur formant une restriction modulable entre un passage d'entrée, destiné à être relié à la sortie de la source, et un passage de sortie, destiné à être relié à la bâche, les deux passages débouchant dans l'alésage du corps, la position du tiroir étant déterminée par un organe de commande électromagnétique en fonction d'un signal électrique de commande, par exemple fonction de la vitesse du véhicule pour une direction assistée.

Un dispositif asservi de contrôle de ce type est décrit dans le document DE-A-2412337 qui concerne de fait un dispositif asservi de contrôle de la pression fournie au moteur hydraulique d'une direction assistée, dans lequel le tiroir modulateur est couplé mécaniquement à un plongeur de l'organe de commande électromagnétique dont la position, fonction du signal électrique de commande, commande directement la position du tiroir, lequel doit être équilibré au moyen de deux ressorts et d'un passage traversant suivant un agencement nécessitant d'exercer - en permanence - un champ magnétique précis et important sur le plongeur de commande du tiroir et ne garantissant pas, en fonction notamment de fluctuations du signal de commande électrique, des risques de battement de l'équipage tiroir/plongeur et soumettant de ce fait les éléments - délicats - de cet équipage à des efforts, voire des chocs intempestifs susceptibles d'en affecter rapidement le bon fonctionnement.

La présente invention, pour sa part, a pour objet de proposer un dispositif asservi de contrôle d'un débit bipassé dans la conduite de dérivation, suivant un agencement simple et robuste, présentant une faible inertie, où le tiroir modulateur est piloté hydrauliquement au moyen d'une valve commandée par l'organe de commande électromagnétique.

Pour ce faire, selon une caractéristique de l'invention, le passage d'entrée comprend une première portion formée dans une extrémité du tiroir et débouchant latéralement en vis à vis d'une première extrémité d'une seconde portion formée dans le corps et dont l'autre extrémité débouche dans une extrémité fermée de l'alésage, une valve, commandée, par l'organe de commande électromagnétique, étant interposée dans ladite seconde portion du passage d'entrée.

Avec un tel agencement, le gradient de pression (modulable) de part et d'autre de la valve est appliqué sur les deux faces opposées du tiroir, qui agit comme un piston dans l'alésage, pour positionner le tiroir sans à-coups et déterminer ainsi avec précision la restriction (modulée) de fuite sans soumettre le tiroir / piston à des chocs ou efforts mécaniques.

D'autres caractéristiques et avantages de la présente invention ressortiront de la description suivante d'un mode de réalisation, donnée à titre illustratif mais nullement limitatif, faite en relation avec les dessins annexés, sur lesquels :

- la Figure 1 est un schéma synoptique d'un système de direction assistée équipé d'un dispositif asservi de contrôle de débit selon l'invention ; et
- la Figure 2 est une vue schématique, en coupe partielle, d'un dispositif de contrôle de débit selon l'invention.

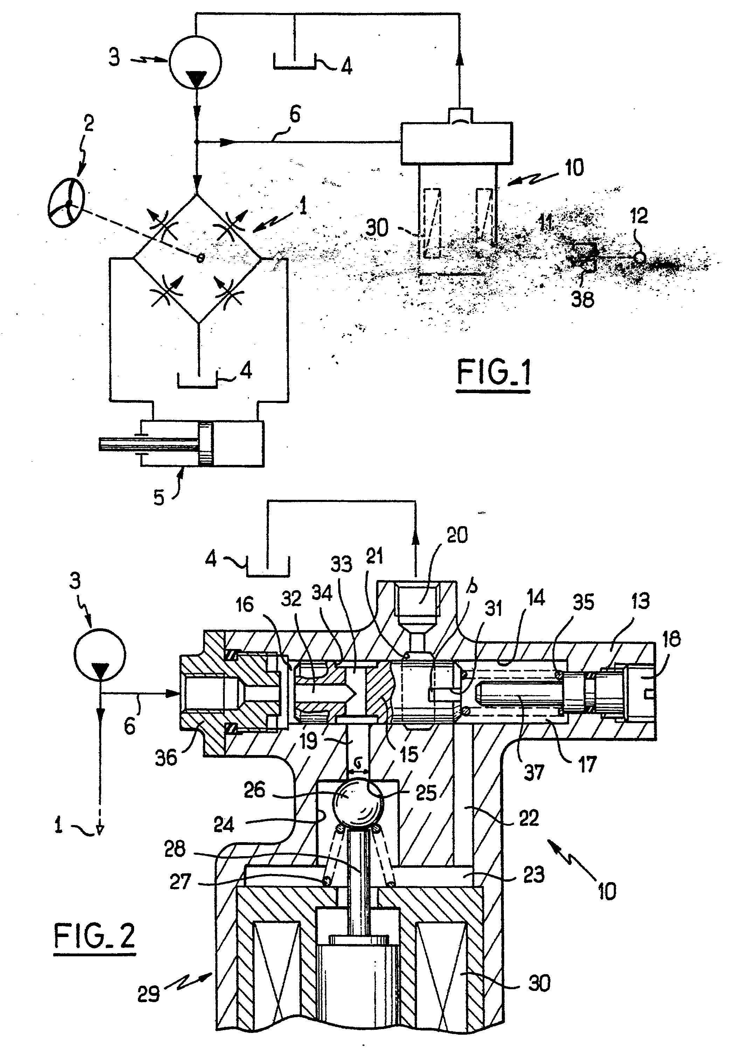

On reconnaît sur le schéma de la Figure 1 un système de direction assistée de véhicule, comprenant, de façon connue en soi, une servovalve de distribution 1 actionné e par le volant de direction 2 et interposée entre une source de fluide sous pression 3, généralement équipée d'un dispositif régulateur de débit intégré, et une bâche 4 pour alimenter sélectivement et alternativement en fluide sous pression les chambres opposées d'un moteur hydraulique 5 d'assistance de direction. Conformément à l'invention, dans une conduite de dérivation 6 entre la sortie de la source de pression 3 et la bâche 4, est interposé un dispositif 10 de contrôle du débit bipassé dans la conduite de dérivation 6 (et donc soustrait à la servovalve de direction 1) en fonction d'un signal électrique 11 élaboré à partir d'un capteur 12 fournissant un paramètre caractéristique, par exemple la vitesse de déplacement d'un véhicule.

Comme on le voit bien sur la Figure 2, le dispositif asservi de contrôle de débit 10 selon l'invention comprend un corps 13 comportant un alésage 14 dans lequel est monté de façon à pouvoir coulisser un piston 15 formant tiroir de distribution. Le piston 15 sépare ainsi l'alésage 14 en une chambre d'entrée 16, reliée à la portion de la conduite de dérivation 6 provenant de la source de pression 3, et une chambre arrière 17 fermée par un bouchon 18. Dans le corps 10 sont formés un passage 19 débouchant dans l'alésage 14 du côté de la chambre d'entrée 16 et un passage de sortie 20, destiné à être relié à la bâche 4 et débouchant dans l'alésage 14, du côté de la chambre arrière 17, par une gorge annulaire 21. Dans la chambre arrière 17 débouche un passage 22 formé dans le corps 10 parallèlement au passage 19 et relié à ce dernier par une chambre 23 et une extrémité de diamètre élargi 24 du passage 19 se raccordant à ce dernier par un épaulement formant siège 25 pour un élément de clapet, constitué en l'occurrence par une bille 26, sollicité contre le siège 25 par un ressort 27 prenant appui sur le fond de la chambre 23. L'élément de clapet 26 est en outre sollicité contre son siège 25 par un plongeur 28 d'un organe électromagnétique de commande 29 du type électroaimant à entrefer constant dont la bobine 30 reçoit le signal électrique 11 sus-mentionné.

Le piston-tiroir 15 comporte, à son extrémité arrière (limitant la chambre arrière 17), au moins une fente longitudinale 31 définissant, avec la gorge annulaire de sortie 21, une restriction variable en fonction de la position du tiroir 15 vis à vis de la gorge annulaire 21. Le piston-tiroir 15 comporte, à son extrémité avant (limitant la chambre d'entrée 16), un alésage central longitudinal 32 débouchant dans la face avant du tiroir et communiquant intérieurement avec un alésage transversal 33 débouchant à la périphérie du tiroir 15 par une gorge annulaire 34 formée dans ce dernier. Dans la chambre arrière 17 est disposé un ressort 35 sollicitant le tiroir 15 dans la direction tendant à réduire le volume de la chambre d'entrée 16 et à augmenter le passage de la restriction s. Un bouchon raccord 36 limitant vers l'extérieur la chambre d'entrée 16 forme avantageusement une butée avant pour le tiroir 15 tandis que, dans la chambre arrière 17, est prévue une butée arrière 37, formée avantageusement d'une tige d'une seule pièce avec le bouchon 18 et formant canon de guidage pour le ressort 35. La dimension axiale de la gorge périphérique 34 est déterminée de façon qu'elle communique en permanence avec le passage 19 sélectivement fermé intérieurement par l'élément de clapet 26.

Le fonctionnement du dispositif est le suivant : soit σ la section du siège 25, f la tare du ressort 27, φ l'effort appliqué par le plongeur 28 sur l'élément de clapet 26, π la pression fournie par la source pression 3 (et régnant dans la chambre d'entrée 16), et p la pression régnant dans la chambre arrière 17, la pression d'ouverture de l'élément de clapet 26 sera donc déterminée par la relation suivante :

$$\pi - p = \frac{f + \varphi}{\sigma}$$

Ce gradient de pression π - p est donc également appliqué sur les deux faces opposées du tiroir-piston 15, ce qui tend à le déplacer vers la droite (sur la Figure 2) à l'encontre du ressort 35 et à lui conférer une position d'équilibre correspondante. A chaque position d'équilibre du tiroir-piston 15 correspond une section déterminée de la restriction s. Ainsi, pour chaque valeur de l'effort φ appliqué par l'organe de commande électromécanique 29 sur l'élément de clapet 26 correspond un orifice calibré s dans le conduit de dérivation 6. Typiquement, l'effort φ est une fonction inversement proportionnelle à la vitesse du véhicule fournie par le capteur 12, d'où il s'en suit une diminution de l'assistance fournie par le moteur 5 lorsque la vitesse du véhicule augmente. Par contre, à basse vitesse, l'effort φ appliqué sur l'élément de clapet 26 est maximum et le piston-tiroir 15 est maintenu plaqué contre la butée arrière 37, la restriction s étant occultée.

Quoique l'invention ait été décrite en relation avec un mode de réalisation particulier, elle ne s'en trouve pas limitée mais est au contraire susceptible de modifications et de variantes qui apparaîtront à l'homme de l'art. En particulier, un circuit de traitement 38 peut fournir un signal électrique de commande 11 élaboré à partir de plusieurs paramètres significatifs du véhicule.

## Revendications

1. Dispositif asservi de contrôle de fluide pour installation hydraulique (1,5), notamment pour direction assistée de véhicule, comprenant une source de pression (3) dont la sortie est reliée à un système de commande (1) de moteur hydraulique (5), le dispositif (10) étant destiné à être interposé dans une conduite de dérivation (6) entre la sortie de la source de pression (3) et une bâche (4) et comprenant un corps (13) comportant un alésage (14) dans lequel est monté coulissant un tiroir modulateur (15) formant une restriction (s) modulable entre un passage d'entrée (32,33,19,23,22,17), destiné à être relié à la sortie de la source (3), et un passage de sortie (20,21), destiné à être relié à la bâche (4), les deux passages débouchant dans l'alésage (14), la position du tiroir (15) étant déterminée, en fonction d'un signal électrique de commande (11), par un organe de commande électromagnétique (29), caractérisé en ce que le passage d'entrée comprend une première portion (32,33) formée dans une extrémité du tiroir (15) et débouchant latéralement (34) en vis à vis d'une première extrémité (19) d'une deuxième portion de passage (19,24,23,22) formée dans le corps et dont l'autre extrémité (22) débouche dans une extrémité fermée (17) de l'alésage (14), une valve (26), commandée par l'organe de commande électromagnétique (29), étant interposée dans ladite seconde portion de passage d'entrée.

2. Dispositif selon la revendication 1, caractérisé en ce que la valve est constituée d'un organe de clapet (26) disposé dans un élargissement (24) formant siège (25) de la première extrémité (19) de ladite seconde portion de passage d'entrée et sollicité vers ce siège par un ressort (27) et par un plongeur (28) de l'organe de commande électromagnétique (29).

3. Dispositif selon la revendication 1 ou la revendication 2, caractérisé en ce qu'il comporte, dans l'extrémité fermée de l'alésage (17), un ressort (35) sollicitant le tiroir (15) dans le sens tendant à ouvrir la restriction modulable (s).

4. Dispositif selon la revendication 3, caractérisé en ce que la restriction modulable (s) est constituée par une gorge annulaire (21) dans l'alésage (14), communiquant avec le passage de sortie (20), et au moins une fente (31) formée dans l'autre extrémité du tiroir (15).

5. Dispositif selon la revendication 4, caractérisé en ce qu'il comporte, dans l'extrémité fermée de l'alésage (17) un moyen de butée (37) limitant le déplacement du tiroir (15).

6. Dispositif selon l'une des revendications précédentes, caractérisé en ce que la première portion de passage d'entrée comprend un alésage longitudinal (32) et un alésage transversal (33) formés dans le plongeur (15), l'alésage transversal (33) débouchant dans une gorge annulaire périphérique (34) du plongeur (15).

## Claims

1. A regulated device for controlling fluid in a hydraulic installation (1, 5), particularly for the assisted steering of a vehicle, comprising a source of pressure (3) the outlet of which is connected to a system for controlling (1) a hydraulic actuator (5), the device (10) being intended to be interposed in a branch hydraulic line (6) between the outlet of the source of pressure (3) and a reservoir (4) and incorporating a body (13) having a bore (14) in which a modulating slide (15) is slidingly mounted which forms a modulable restriction (s) between an inlet passage (32, 33, 19, 23, 22, 17), which is intended to be connected to the outlet of the source (3), and an outlet passage (20, 21), which is intended to be connected to the reservoir (4), both passages opening into the bore (14) the position of the slide (15) being determined as a function of an electrical control signal (11) by an electromagnetic control member (29), characterized in that the inlet passage includes a first portion, (32, 33) which is formed in one end of the slide (15) and opens laterally (34) facing a first end (19) of a second passage portion (19, 24, 23, 22) which is formed in the body and the other end (22) of which opens into a closed end (17) of the bore (14), a valve (26) controlled by the electro-magnetic control component (29) being interposed in said second inlet passage portion.

2. Device according to Claim 1, characterized in that the valve consists of a valve member (26) which is arranged in an enlargement (24) forming a seat (25) of the first end (19) of the said second inlet passage portion and which is biased towards this seat by a spring (27) and by a plunger (28) of the electromagnetic control member (29).

3. Device according to Claim 1 or Claim 2, characterized in that it comprises, in the closed end of the bore (17), a spring (35) biasing the slide (15) in the direction tending to open the modulable restriction (s).

4. Device according to Claim 3, characterized in that the modulable restriction (s) consists of an annular groove (21) in the bore (14), communicating with the outlet passage (20), and at least one slot (31) formed in the other end of the slide (15).

5. Device according to Claim 4, characterized in that it comprises, in the closed end of the bore (17) an abutment means (37) limiting the movement of the slide (15).

6. Device according to one of the preceding claims, characterized in that the first inlet passage portion includes a longitudinal bore (32) and a transverse bore (33) formed in the plunger (15), the transverse bore (33) opening into a peripheral annular groove (34) of the plunger (15).

**Patentansprüche**

1. Drucksteuer-Servoeinrichtung für eine hydraulische Anlage (1, 5), insbesondere für eine Kraftfahrzeugservolenkung, mit einer Druckquelle (3), deren Auslaß mit einem Steuersystem (1) eines hydraulischen Motors (5) verbunden ist, wobei die Servovorrichtung (10) in eine Zweigleitung (6) zwischen dem Auslaß der Druckquelle (3) und einem Reservoir (4) einsetzbar ist und einen Körper (13) mit einer Bohrung (14) aufweist, in der ein Modulationsschieber (15) gleitend gelagert ist und hierbei eine veränderbare Drosselstelle zwischen einem am Auslaß der Druckquelle (3) anschließbaren Einlaßkanal (32, 33, 19, 23, 22, 17) und einem am Reservoir (4) anschließbaren Auslaßkanal (20, 21) bildet, wobei die beiden Kanäle in der Bohrung (14) münden und die Stellung des Schiebers (15) in Abhängigkeit von einem elektrischen Steuersignal (11) von einem elektromagnetischen Steuerglied (29) bestimmt wird, dadurch gekennzeichnet, daß der Einlaßkanal einen ersten Abschnitt (32, 33) aufweist, der in einem Ende des Schiebers (15) gebildet ist und seitlich (34) gegenüber einem ersten Ende (19) eines in dem Körper gebildeten zweiten Kanalabschnittes (19, 24, 23, 22) mündet, dessen anderes Ende (22) in einem geschlossenen Ende (17) der Bohrung (14) mündet, wobei ein von dem elektromagnetischen Steuerglied (29) gesteuertes Ventil (26) in dem zweiten Abschnitt des Einlaßkanals angeordnet ist.

2. Vorrichtung nach Anspruch 1, dadurch gekennzeichnet, daß das Ventil von einem Ventilglied (26) gebildet wird, das in einer einen Sitz (25) bildenden Erweiterung (24) des ersten Endes (19) des zweiten Einlaßkanalabschnittes angeordnet ist und in Richtung auf diesen Sitz von einer Feder (27) und einem Stößel (28) des elektromagnetischen Steuergliedes (29) vorgespannt wird.

3. Vorrichtung nach Anspruch 1 oder 2, dadurch gekennzeichnet, daß sie eine in dem geschlossenen Ende der Bohrung (17) angeordnete Feder (25) aufweist, die den Schieber (15) im Sinne einer Öffnung der veränderbaren Drosselstelle (s) vorspannt.

4. Vorrichtung nach Anspruch 3, dadurch gekennzeichnet, daß die veränderbare Drosselstelle (s) von einer mit dem Auslaßkanal (20) verbundenen Ringnut (21) in der Bohrung (14) und mindestens einen Schlitz (31) in dem anderen Ende des Schiebers (15) gebildet wird.

5. Vorrichtung nach Anspruch 4, dadurch gekennzeichnet, daß sie in dem geschlossenen Ende der Bohrung (17) einen Anschlag (37) aufweist, der die Verschiebung des Schiebers (15) begrenzt.

6. Vorrichtung nach einem der vorhergehenden Ansprüche, dadurch gekennzeichnet, daß der erste Abschnitt des Einlaßkanals eine Längsbohrung (32) und eine Querbohrung (33) aufweist, die in dem Stößel (15) gebildet sind, wobei die Querbohrung (33) in einer ringförmigen Umfangsnut (34) des Schiebers (15) mündet.

EP 0 194 928 B1

FIG.1

FIG.2